# EUROPEAN PATENT APPLICATION

(11) **EP 4 704 021 A1**
(43) Date of publication of application: **04.03.2026**
(21) Application number: 25195970.6
(22) Date of filing: 14.08.2025
(51) Int. Cl.: G06Q 50/08, B61L 27/53, G06N 3/044, G06N 3/0442, G06N 3/08, G06N 20/10, G06Q 50/26, G06Q 50/40

(54) **RAILWAY INFRASTRUCTURE**

(30) Priority: 28.08.2024 GB 202412605
(71) Applicant: Siemens Mobility Limited, London, NW1 2PL (GB)
(72) Inventor: Arul, Louise, Chippenham, SN15 1GG (GB); Camargo Castel-Branco, Camila, Chippenham, SN15 1GG (GB); Pingle, Prachi, Chippenham, SN15 1GG (GB); Robinson, Elliot, Chippenham, SN15 1GG (GB); Wentzel, Freya, Chippenham, SN15 1GG (GB)
(74) Representative: Siemens Patent Attorneys

(57) **Abstract**

A computer-implemented method for predicting an effect of weather on railway infrastructure, the method comprising: obtaining railway infrastructure data describing one or more items of railway infrastructure and a respective location of each of the one or more items of railway infrastructure, obtaining weather data describing weather associated with the respective location of each of the one or more items of railway infrastructure, for each of the one or more items of railway infrastructure, providing the railway infrastructure data and the associated weather data to a trained machine learning model to obtain an output representative of an effect of the weather on the respective railway infrastructure item, and communicating to a user information representing an effect of the weather on the one or more items of railway infrastructure based on the one or more outputs of the trained machine learning model.

## Description

### Field of the Disclosure

The present disclosure relates to railway infrastructure.

### Background of the Disclosure

Railway infrastructure, such as railway track and trackside assets, may be susceptible to operational interruption or even damage by severe weather events. For example, high rainfall may cause track flooding and/or displace the track ballast; high winds may damage overhead power lines; extreme high temperatures may cause tracks to buckle; and lightning-induced power surges may damage sensitive electrical equipment. Advance warning of such weather-associated risks may desirably enable an operator of railway infrastructure to take pre-emptive action to avoid operational interruption and/or damage to the railway infrastructure.

### Summary of the Disclosure

An objective of aspects of the present disclosure is to provide a system and method for predicting an impact of weather on the various assets forming the railway infrastructure, to thereby enable the railway operator to take pre-emptive actions, such as maintenance, to avoid operational interruption and/or damage to the railway infrastructure. This may desirably reduce costs for the railway operator and enable the railway operator to meet service-level agreements, in addition to providing a more reliable service for passengers.

A first aspect of the present disclosure provides a computer-implemented method for predicting an effect of weather on railway infrastructure, the method comprising: obtaining railway infrastructure data describing one or more items of railway infrastructure and a respective location of each of the one or more items of railway infrastructure, obtaining weather data describing weather associated with the respective location of each of the one or more items of railway infrastructure, for each of the one or more items of railway infrastructure, providing the railway infrastructure data and the associated weather data to a trained machine learning model to obtain an output representative of an effect of the weather on the respective railway infrastructure item, and communicating to a user information representing an effect of the weather on the one or more items of railway infrastructure based on the one or more outputs of the trained machine learning model.

The machine learning model is trained to predict an effect of weather types on each of the railway infrastructure assets. The machine learning model may represent a relatively computationally efficient mechanism for obtaining predictions regarding the effects of weather on railway infrastructure, in particular considering that weather data may typically be relatively large and complex time series data. For example, the weather data may comprise timeseries data, in which the location specific weather data comprises timestamps. The method may thus produce a risk prediction for each railway infrastructure asset, the risk prediction representing a risk of damage or interruption to each asset by weather conditions.

**In** an implementation, the trained machine learning model comprises a long short-term memory recurrent neural network. A long short-term memory recurrent neural network (LSTM) may be a particularly advantageous form of machine learning model because they may be well suited to handling large time-series datasets, such as may be typical of weather data. The LSTM model is a good model for time series data and sequence data, being able to remember information for a long time without altering the data makes this model beneficial, especially for the weather dataset employed in this application. The dataset has weather conditions that are linked to a timestamp, this format is optimal for the format that LSTM works in. LSTMs can also handle larger sequences of data without forgetting or distorting the information and can also deal with larger datasets efficiently, and are less likely to suffer from the vanishing gradient problem.

**In** an implementation, the trained machine learning model comprises a support vector machine. A support vector machine (SVM) may desirably be a highly simple and computationally efficient form of machine learning model. An SVM may desirably be well suited to handling time-series weather data, and datasets with high dimensionality.

In an implementation, the obtaining weather data comprises obtaining weather data describing weather associated with a plurality of locations, and the method comprises determining one or more portions of the weather data associated with the respective location of each of the one or more items of railway infrastructure. In other words, the weather data could describe weather having an effect on a relatively large area, and the method may involve filtering the weather data to extract the data describing weather relevant to the particular locations of the railway infrastructure assets. This may desirably avoid the need to input large volumes of irrelevant data into the machine learning model, thereby reducing a computational resource incurred by the machine learning model.

In an implementation, the method comprises determining based on the one or more outputs of the trained machine learning model whether the effect of the weather on the respective railway infrastructure item meets a predefined condition, and in response to a determination that the effect does meet the predefined condition, communicating an alert message to the user. In other words, the method may involve determining whether the predicted effect(s) of the weather meet some predefined severity threshold, and if it does, raising a visual and/or audible alert message to alert a user.

In an implementation, the communicating to the user the information comprises displaying the information via a graphical user interface.

In an implementation, the obtaining the weather data comprises obtaining the weather data describing the weather associated with the respective location of each of the one or more items of railway infrastructure data for a plurality of time steps. In other words, the weather data may be time-series data describing the weather for each location at a plurality of different times.

In an implementation, the communicating to the user the information comprises communicating to the user information representing the time step associated with the respective weather data. In other words, the time of the relevant weather effect may also be communicated to the user.

In an implementation, the communicating to the user the information comprises communicating to the user information representing effects of the weather on the one or more items of railway infrastructure data based on the one or more outputs for the plurality of time steps. In other words, the predicted effects may be communicated to the user for the plurality of time steps, so that the user may be able to understand the effects over the range of timesteps.

In an implementation, the displaying the information via a graphical user interface comprises displaying to the user via the graphical user interface a map in which the information is displayed on the map in a spatial position corresponding to a location of the respective item of railway infrastructure. The user may thereby be able to easily understand locations of at-risk infrastructure.

In an implementation, the displaying the information on the map comprises displaying the information on the map at a first scale, receiving a user input, and changing the scale of the displayed information based on the user input.

In an implementation, the one or more items of railway infrastructure comprises a plurality of mutually different items of railway infrastructure.

In an implementation, the railway infrastructure data further describes an effect of weather on the railway infrastructure. In other words, the railway infrastructure data could be labelled with metadata describing a susceptibility of the particular infrastructure asset to weather conditions. Alternatively, the machine learning model could be trained to identify the effects of weather on different types of asset.

In an implementation the method is for maintaining railway infrastructure, and comprises determining a maintenance action to apply to the railway infrastructure based on the predicted effect.

A second aspect of the present disclosure provides a railway infrastructure monitoring system configured to monitor one or more items of railway infrastructure by performing the method of any one of the preceding statements.

A third aspect of the present disclosure provides a computer program comprising instructions, which, when executed by a railway monitoring system causes the railway monitoring system to carry out the method of any one of the preceding statements.

A fourth aspect of the present disclosure provides a computer-readable data carrier having the computer program of the preceding statement stored thereon.

These and other aspects of the invention will be apparent from the embodiment(s) described below.

### Brief Description of the Drawings

In order that the present invention may be more readily understood, embodiments of the invention will now be described, by way of example, with reference to the accompanying drawings, in which:
Figure 1 shows schematically an example of a railway embodying the present disclosure, comprising a railway infrastructure monitoring system for monitoring the railway infrastructure;
Figure 2 shows schematically a hardware implementation of the railway infrastructure monitoring system;
Figure 3 shows schematically a visualisation of an operation in a method implemented by the railway infrastructure monitoring system;
Figure 4 shows schematically a method for maintaining railway infrastructure, including an operation for monitoring the railway infrastructure using the railway infrastructure monitoring system;
Figure 5 shows schematically processes involved in the operation for monitoring the railway infrastructure, including operations for training a machine learning model and communicating information to a user;
Figure 6 shows schematically processes involved in the operation for training the machine-learning model, and
Figure 7 shows schematically processes involved in the operation for communicating information to a user.

### Detailed Description of the Disclosure

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

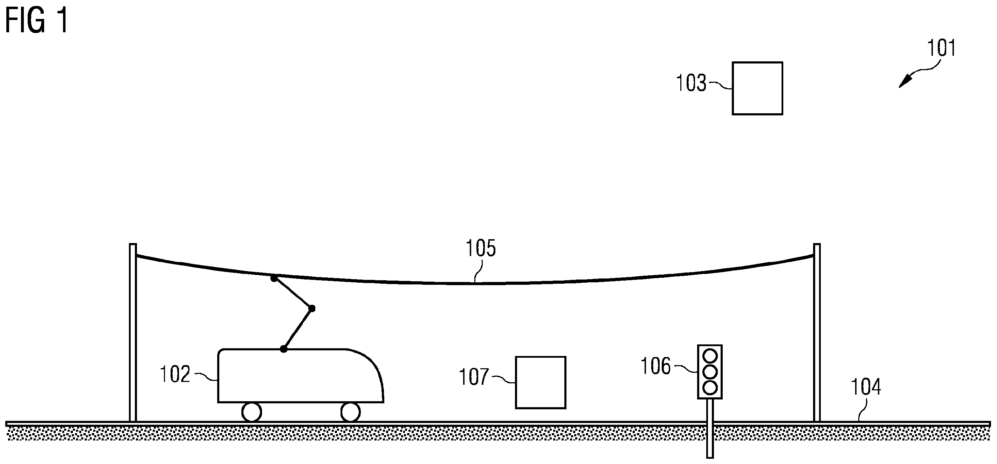

An example of a railway embodying aspects of the present disclosure is depicted schematically in Figure 1.

The railway comprises railway infrastructure 101, a train 102, and a railway infrastructure monitoring system 103. The railway infrastructure 101 comprises track 104, overhead power line assembly 105, trackside signals 106, and trackside control system 107. The train 102 runs on the track 104 and receives electrical power from the overhead power line assembly 105. The trackside control system 107 may be employed, for example, to control points on the track 104, and/or to exchange control information with the train 102.

The railway infrastructure may be susceptible to operational interruption or even damage by severe weather events. For example, high rainfall may cause the track 104 to flood, or displace the ballast on which the track is supported. High winds may damage the overhead power line assembly 105, for example, by causing the power line to stretch or detach from the ground supports. High temperatures may cause the track 104 to buckle due to excessive expansion. And lightning strikes could cause electrical power surges which may damage electronics of the trackside control system 107 and/or the signals 106.

Such weather incidents may thus be highly disruptive to the operation of the railway, by inhibiting the running of trains and/or incurring significant downtime and cost to repair damage to the railway infrastructure. Advance warning of such weather-associated risks may desirably enable an operator of railway infrastructure to take pre-emptive actions to avoid operational interruption and/or damage to the railway infrastructure.

Weather forecast data is readily commercially available. However, railways may typically utilise a large number of different items of railway infrastructure, and weather data may be highly complex, and it would thus be impracticable for the risk posed by forecasted weather to railway infrastructure assets to be accurately assessed by a human on the scale of a railway network. This is particularly so because of the dynamic nature of weather, requiring such an assessment to be performed regularly, ideally even continuously, and because, to be useful and avoid false alerts, such forecasts should have a relatively high spatial resolution, and be accurate and reliable.

The present disclosure thus employs the railway infrastructure monitoring system 103 to monitor forecasted weather and predict the likely effects of the weather on the items of railway infrastructure. In view of the large volumes of complex data involved, the railway infrastructure monitoring system 103 employs a trained machine learning model to generate individual predictions as to the likely risk posed to each of the various items of railway infrastructure by forecasted weather. The railway infrastructure monitoring system 103 may thus be utilised by the railway operator to determine in advance infrastructure assets that are at risk of interruption or damage by incoming weather, thereby enabling the operator to take pre-emptive action. For example, the railway operator may pre-emptively clean drainage culverts for railway track when high rainfall is predicted to risk damage to track ballast, and/or may suitably position and equip maintenance operatives where it is predicted that high winds risk damaging the overhead lines.

In the example, the railway infrastructure monitoring system 103 is depicted as being located beside the railway track 104. However, in practice the monitoring system 103 could be located remotely of the railway track 104. For example, the monitoring system 103 could be located in a central control station, and could monitor multiple railway lines and associated infrastructure, or the monitoring system 103 could be implemented by cloud-based shared computing resources.

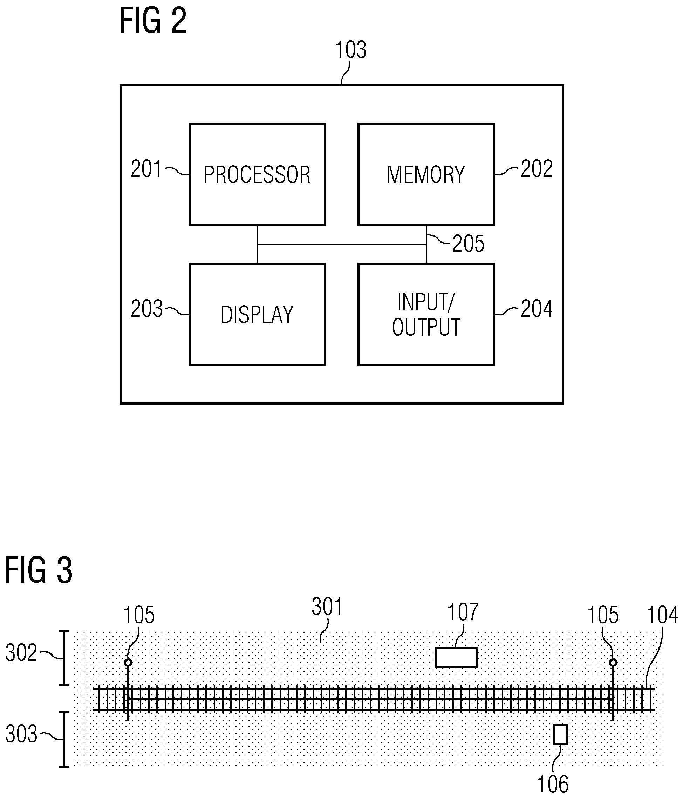

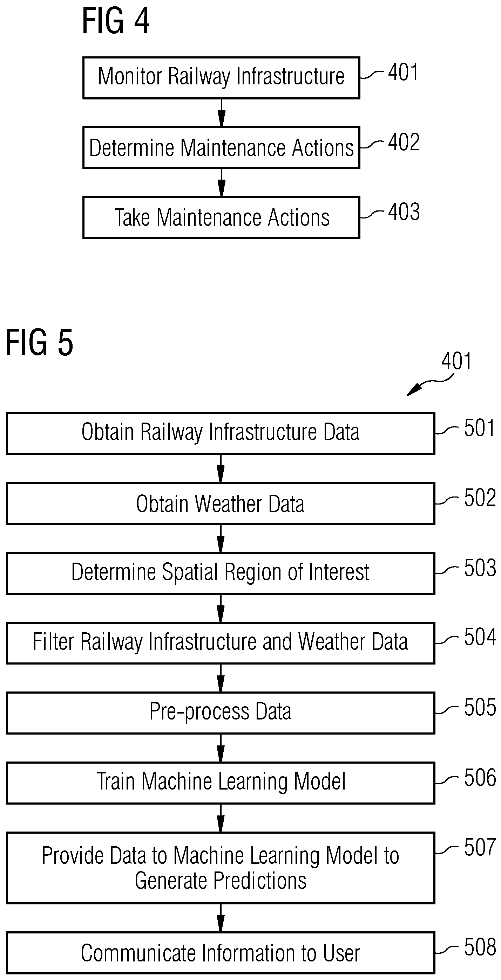

The railway infrastructure monitoring system 103 will be described in further detail with reference to Figures 2 and 3. A method for maintaining the railway infrastructure, which includes monitoring the railway infrastructure for a risk of damage using the railway infrastructure monitoring system 103, will be described in further detail with reference to Figures 4 to 7.

Referring next to Figure 2, in examples the railway infrastructure monitoring system 103 comprises processor 201, memory 202, display 203, input/output device 204, and system bus 205.

Processor 201 is configured for execution of instructions of the computer program for maintaining the railway infrastructure. Memory 202 is configured for non-volatile storage of the computer program, defining machine-readable instructions, for execution by the processor, and for serving as read/write memory for storage of operational data associated with computer programs executed by the processor 201. Display 203 is configured for displaying a graphical user interface to enable a user to interact with the maintenance computer program, and to enable the user to receive information in a visual form from the computer program. Input/output interface 204 is configured for connection of the monitoring system 103 to external systems, for example, to a weather forecasting system to receive weather forecast data, and to an infrastructure management system to receive data describing railway infrastructure and characteristics thereof. The components of the scheduling system 115 are in communication via system bus 205.

Referring next to Figure 3, in implementations the method for monitoring the railway infrastructure 101 involves determining a spatial region to be monitored.

A difficulty encountered in monitoring the railway infrastructure is that the railway track and trackside infrastructure may extend over a relatively long distance through multiple different cells of weather data. Accordingly, a relatively large volume of weather data may be potentially relevant to the infrastructure. However, the computational complexity, and so computing resource required for executing a machine learning model having such a large volume of data as an input may disadvantageously be relatively high. It is generally desirable therefore to minimise the volume of weather data provided as an input to the machine learning model.

In implementations therefore, the monitoring system 103 filters accessible weather data to extract only weather data likely relevant to the monitored infrastructure. This is achieved by determining a spatial region of interest by reference to the extent of the railway track. Thus, referred to Figure 3, an extent of the railway track 104 is determined, based on which the spatial region of interest 301, depicted as shaded area in the Figure, is determined to encompass the area of the track 104 and a trackside margin 302, 303 on either side of the track. Given that the trackside infrastructure accompanying the railway track is typically located close beside or overflying the railway track, by determining the region of interest in this way it can be assumed that the weather data that is relevant to both the track and the trackside infrastructure may be correctly identified, whereas specious weather data relating to the extended locality may be omitted.

The area of the trackside margins determined to form a part of the spatial region of interest should ideally have sufficient width, that is the distance to which they extend in a direction perpendicular to the length of the track, to encompass all or a majority of the trackside infrastructure. However, the trackside margins should not be so excessive in width as to encompass additional area not containing railway infrastructure, as this risks introducing specious weather data to the predictions. The trackside margins 302 may have uniform width with respect to the length of the track, as depicted in Figure 3. This uniform width area may be relatively easy to compute, and still be expected to adequately encompass the trackside infrastructure. The trackside margins could be computed to have some predefined width along the length of the track. Alternatively, the width of the trackside margins could vary with the length of the track, for example, based on characteristics of the railway infrastructure, such as a number of tracks and/or a density of the railway infrastructure. As an alternative, the width of the trackside margins could be computed based on a spatial resolution of the weather data; where the weather data has a high spatial resolution, there may be advantage in computing the width of the trackside margins relatively precisely. In contrast, where the weather data has a relatively low spatial resolution, the trackside margins may be computed to be relatively greater in width, for example, a width matching the spatial resolution of the weather data, without risking introducing specious weather data.

Referring next to Figure 4, in examples a method for maintaining the railway infrastructure 101 comprises three operations.

At operation 401, the railway infrastructure is monitored using the computer program running on the monitoring system 103, to predict effects of forecasted weather on the railway infrastructure assets. Operation 401 will be described in further detail with reference to Figure 5.

At operation 402, based on the outputs of the monitoring system at operation 401, maintenance requirements for the railway infrastructure are determined. Operation 402 could, for example, involve the computer program of the monitoring system 115 also determining maintenance requirements, for example, by comparing the infrastructure item predicted to be at risk to a lookup table in which maintenance requirements are associated with the risk. Alternatively, operation 402 could involve a human user determining suitable maintenance operations to counteract the predicted risks.

At operation 403, the maintenance actions determined at operation 402 may be executed. Operation 403 could, for example, involve the monitoring system 103 automatically instructing the actions. For example, in the case of a risk of lightning-induced power surface, the monitoring system 103 could instruct shut-down of the train control system 107. Alternatively or additionally, operation 403 could involve a maintenance operative executing a pre-emptive maintenance action.

Referring next to Figure 5, operation 401 performed by the monitoring system 115 for monitoring the railway infrastructure generating schedules for trains running on the railway track involves eight processes.

At process 501, the computer program causes the processor 201 of the monitoring system 115 to obtain railway infrastructure data, that being data describing the infrastructure items of the rail line, or section of rail line, being monitored. The railway infrastructure data could, for example, include data itemising each infrastructure asset, its location, and associating with each infrastructure asset an effect of various weather conditions on the asset. For example, in the case of the track 104, the data may define the track as being susceptible to damage in the event of rainfall exceeding a certain rate for a certain duration. And in the case of the overhead power line assembly 105, the data could define a maximum wind condition above which damage may occur.

At process 502, the computer program causes the processor 201 of the monitoring system 115 to access weather data. Process 502 could, for example, involve the processor 201 weather forecast data from an external forecasting system. The weather data may be time-series data, describing weather at plural timesteps.

At process 503, the computer program causes the processor 201 of the monitoring system 115 to determine a spatial region of interest. As previously described with reference to Figure 3, this could involve the processor determining an extent of the railway track being monitored based on the track location data, and then determining the spatial region to encompass the track and the trackside margins either side of the track.

At process 504, the computer program causes the processor 201 of the monitoring system 115 to filter the infrastructure and weather data obtained at processes 501 and 502, to extract only the data that is relevant to the spatial region determined at process 503.

At process 505, the computer program causes the processor 201 of the monitoring system 115 to pre-process the filtered weather and infrastructure data, for example, to identify and remove anomalous values, and reformat the data into a suitable form.

At process 506, the computer program causes the processor 201 of the monitoring system 115 to train a machine learning model to generate predictions of the effect of weather on the railway infrastructure assets. In examples, the machine learning model may comprise a long short-term memory recurrent neural network (LSTM).

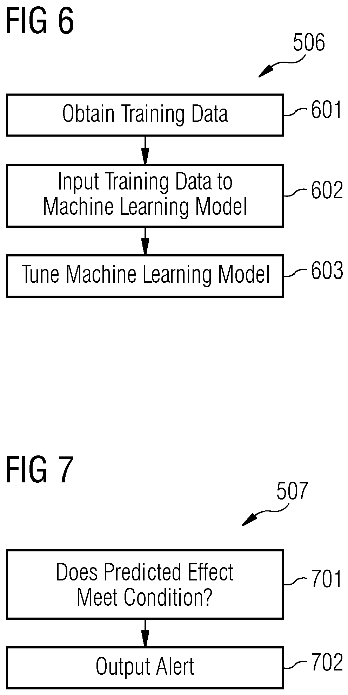

It should be understood that process 506 could be performed either in the order indicated, or could be performed as a separate initial process, potentially by a computer system other than the monitoring system 115. Process 506 will be described in further detail with reference to Figure 6.

At process 507, the computer program causes the processor 201 of the monitoring system 115 to execute the trained machine learning model on the pre-processed data obtained at process 505.

At process 508, the computer program causes the processor 201 of the monitoring system 115 communicate the information generated at process 507 to the user, for example, using the display 203.

Referring next to Figure 6, operation 506 performed by the monitoring system 115 for training the machine-learning model may involve three processes.

At process 601, the computer program causes the processor 201 of the monitoring system 115 to obtain training data, that is data describing a weather condition and labelled with an associated effect to railway infrastructure assets caused by the weather condition. The training dataset may be cleaned and pre-processed, for example, by identifying outliers using interquartile range, renaming headings, and identifying missing data. Where the dataset is time series data, the timestamps in the dataset may be reformatted to enable the LSTM to be better work with the dataset. The dataset may be partitioned into windows per time-period, to allow the LSTM to parse information chronological. This may optimise the LSTM's memory capabilities to create meteorological context during the training phase. To make the results of the LSTM more accurate, superfluous attributes may be omitted from the dataset. The dataset may then be partitioned into testing and training data, and a data structure for batched timesteps may be created.

At process 602, the computer program causes the processor 201 of the monitoring system 115 to initialise the machine learning model, that is to construct an initial model, input the training data to the model, and compute an error in the resultant prediction. The LSTM model may then be trained, for example using the Keras library to hyperparameter tune. During the training phase, the LSTM may use forget gates and activation functions to make decisions regarding both current and new input data. This decision to disregard irrelevant data acts to tune the hyperparameters of the internal architecture. This enables the model to be adjusted and produce the accurate results informed by learned context from prior observations.

At process 603, the computer program causes the processor 201 of the monitoring system 115 to tune the machine learning model, for example, by adjusting parameters of the model, based on the error computed at process 602.

The model may thus be trained to produce a risk prediction for the 'severity rating' target variable; this numerical value is based on an aggregation of ratings per weather factor (e.g., precipitation, temperature etc.). An output inclined towards 1 may inform that an area has be given a high-risk rating based on current and recently past weather conditions; a value tending towards 0 may indicate that the area is considered low risk.

Referring next to Figure 7, operation 507 performed by the monitoring system 115 for communicating information to a user of the monitoring system may involve two processes.

At process 701, the computer program causes the processor 201 of the monitoring system 115 to evaluate the weather effect prediction, and determine whether the weather effect prediction meets some predefined condition. For example, where it is predicted at stage 507 that a certain weather condition is likely to cause damage to a railway infrastructure asset, a determination may be made as to whether the damage may practically be avoided by a practicable maintenance action.

At process 702, the computer program causes the processor 201 of the monitoring system 115 to generate an alert to a user where the determination at process 701 is in the affirmative. For example, the alert could be a visual alert displayed to a user via the display 203.

The system and apparatus described above may use dedicated processor systems, micro controllers, programmable logic devices, microprocessors, or any combination thereof, to perform some or all of the operations described herein. Some of the operations described above may be implemented in software and other operations may be implemented in hardware. Any of the operations, processes, and/or methods described herein may be performed by an apparatus, a device, and/or a system substantially similar to those as described herein and with reference to the illustrated figures. References herein to a device, or similar, do not imply a unitary apparatus, and instead include a system of components, which may or may not be co-located.

The processor may execute instructions or "code" stored in memory. The memory may store data as well. The processing device may include, but may not be limited to, an analog processor, a digital processor, a microprocessor, a multi-core processor, a processor array, a network processor, or the like. The processing device may be part of an integrated control system or system manager, or may be provided as a portable electronic device configured to interface with a networked system either locally or remotely via wireless transmission.

The memory may be integrated together with the processing device, for example RAM or FLASH memory disposed within an integrated circuit microprocessor or the like. In other examples, the memory may comprise an independent device, such as an external disk drive, a storage array, a portable FLASH key fob, or the like. The memory and processing device may be operatively coupled together, or in communication with each other, for example by an I/O port, a network connection, or the like, and the processing device may read a file stored on the memory. Associated memory may be "read only" by design (ROM) by virtue of permission settings, or not. Other examples of memory may include, but may not be limited to, WORM, EPROM, EEPROM, FLASH, or the like, which may be implemented in solid state semiconductor devices. Other memories may comprise moving parts, such as a known rotating disk drive. All such memories may be "machine-readable" and may be readable by a processing device.

Operating instructions or commands may be implemented or embodied in tangible forms of stored computer software (also known as "computer program" or "code"). Programs, or code, may be stored in a digital memory and may be read by the processing device. "Computer-readable storage medium" (or alternatively, "machine-readable storage medium") may include all of the foregoing types of memory, as well as new technologies of the future, as long as the memory may be capable of storing digital information in the nature of a computer program or other data, at least temporarily, and as long at the stored information may be "read" by an appropriate processing device. The term "computer-readable" may not be limited to the historical usage of "computer" to imply a complete mainframe, mini-computer, desktop or even laptop computer. Rather, "computer-readable" may comprise storage medium that may be readable by a processor, a processing device, or any computing system. Such media may be any available media that may be locally and/or remotely accessible by a computer or a processor, and may include volatile and non-volatile media, and removable and non-removable media, or any combination thereof.

A program stored in a computer-readable storage medium may comprise a computer program product. For example, a storage medium may be used as a convenient means to store or transport a computer program. For the sake of convenience, the operations may be described as various interconnected or coupled functional blocks or diagrams. However, there may be cases where these functional blocks or diagrams may be equivalently aggregated into a single logic device, program or operation with unclear boundaries.

While the application describes specific examples of carrying out embodiments of the invention, those skilled in the art will appreciate that there are numerous variations and permutations of the above described systems and techniques that fall within the spirit and scope of the invention as set forth in the appended claims. For example, while specific terminology has been employed above to refer to electronic design automation processes, it should be appreciated that various examples of the invention may be implemented using any desired combination of electronic design automation processes.

One of skill in the art will also recognize that the concepts taught herein can be tailored to a particular application in many other ways. In particular, those skilled in the art will recognize that the illustrated examples are but one of many alternative implementations that will become apparent upon reading this disclosure.

Although the specification may refer to "an", "one", "another", or "some" example(s) in several locations, this does not necessarily mean that each such reference is to the same example(s), or that the feature only applies to a single example.

## Claims

1. A computer-implemented method for predicting an effect of weather on railway infrastructure, the method comprising:
obtaining railway infrastructure data describing one or more items of railway infrastructure and a respective location of each of the one or more items of railway infrastructure,
obtaining weather data describing weather associated with the respective location of each of the one or more items of railway infrastructure,
for each of the one or more items of railway infrastructure, providing the railway infrastructure data and the associated weather data to a trained machine learning model to obtain an output representative of an effect of the weather on the respective railway infrastructure item, and
communicating to a user information representing an effect of the weather on the one or more items of railway infrastructure based on the one or more outputs of the trained machine learning model.

2. The computer-implemented method of claim 1, wherein the trained machine learning model comprises a long short-term memory recurrent neural network.

3. The computer-implemented method of claim 1, wherein the trained machine learning model comprises a support vector machine.

4. The computer-implemented method of claim 1, wherein the obtaining weather data comprises obtaining weather data describing weather associated with a plurality of locations, and the method comprises determining one or more portions of the weather data associated with the respective location of each of the one or more items of railway infrastructure.

5. The computer-implemented method of claim 1, comprising determining based on the one or more outputs of the trained machine learning model whether the effect of the weather on the respective railway infrastructure item meets a predefined condition, and in response to a determination that the effect does meet the predefined condition, communicating an alert message to the user.

6. The computer-implemented method of claim 1, wherein the communicating to the user the information comprises displaying the information via a graphical user interface.

7. The computer-implemented method of claim 1, wherein the obtaining the weather data comprises obtaining the weather data describing the weather associated with the respective location of each of the one or more items of railway infrastructure data for a plurality of time steps.

8. The computer-implemented method of claim 7, wherein the communicating to the user the information comprises communicating to the user information representing the time step associated with the respective weather data.

9. The computer-implemented method of claim 7, wherein the communicating to the user the information comprises communicating to the user information representing effects of the weather on the one or more items of railway infrastructure data based on the one or more outputs for the plurality of time steps.

10. The computer-implemented method of claim 6, wherein the displaying the information via a graphical user interface comprises displaying to the user via the graphical user interface a map in which the information is displayed on the map in a spatial position corresponding to a location of the respective item of railway infrastructure.

11. The computer-implemented method of claim 10, wherein the displaying the information on the map comprises displaying the information on the map at a first scale, receiving a user input, and changing the scale of the displayed information based on the user input.

12. The computer-implemented method of claim 1, wherein the one or more items of railway infrastructure comprises a plurality of mutually different items of railway infrastructure.

13. The computer-implemented method of claim 1, wherein the railway infrastructure data further describes an effect of weather on the railway infrastructure.

14. The computer-implemented method of claim 1 for maintaining railway infrastructure, comprising determining a maintenance action to apply to the railway infrastructure based on the predicted effect.

15. A railway infrastructure monitoring system configured to monitor one or more items of railway infrastructure by performing the method of any one of the preceding claims.

16. A computer program comprising instructions, which, when executed by a railway monitoring system causes the railway monitoring system to carry out the method of any one of claims 1 to 14.

17. A computer-readable data carrier having the computer program of claim 16 stored thereon.
